# EUROPEAN PATENT SPECIFICATION

(11) **EP 1 036 475 B1**
(45) Date of publication and mention of the grant of the patent: **09.03.2011**
(21) Application number: 99933193.7
(22) Date of filing: 30.07.1999
(51) Int. Cl.: H04W 4/06, H04W 4/02, H04L 29/08

(54) **LOCAL INFORMATION BROADCAST SYSTEM**
RUNDFUNKSYSTEM FÜR LOKALE INFORMATION
SYSTEME DE DIFFUSION D'INFORMATIONS LOCALES

(30) Priority: 30.07.1998 JP 21576098
(43) Date of publication of application: 20.09.2000
(73) Proprietor: Sony Computer Entertainment Inc., Tokyo 107-0052 (JP)
(72) Inventor: KAWAI, Eiji, Sony Computer Entertainment Inc., Tokyo 107-0052 (JP); YOSHIMORI, Masaharu, Minato-ku, Tokyo 107-0052 (JP); ITO, Takeshi, Sony Computer Entertainment Inc., Tokyo 107-0052 (JP)
(74) Representative: Hedley, Nicholas James Matthew
(86) International application number: PCT/JP1999/004117
(87) International publication number: WO 2000/007392

(56) References cited:
- EP-A- 0 854 584
- WO-A-98/06080

## Description

### BACKGROUND OF THE INVENTION

### Field of the Invention

This invention relates to an information receiver and method for receiving various information, and also to an information transmission and reception system that receives by means of the information receiver various information transmitted from a transmitter.

### Background of the Invention

In recent years, portable information receivers and transmitters have been proposed that allow one to receive various information by a wireless call, radio paging and wireless broadcasting. For example, among portable information receivers are those that are known as pagers, which make it possible to receive information distribution services such as weather forecasts and information about public events. Such information receivers receive broadcasts from a prescribed base station that is in their coverage area.

The reception area for wireless calls, radio paging and wireless broadcasting has heretofore been covered by a set of roughly circular shapes centered on base stations, and the coverage rate and the boundary lines of the coverage area vary with the number of base stations, their transmission power, and the topography, making the borders of the coverage area generally unclear.

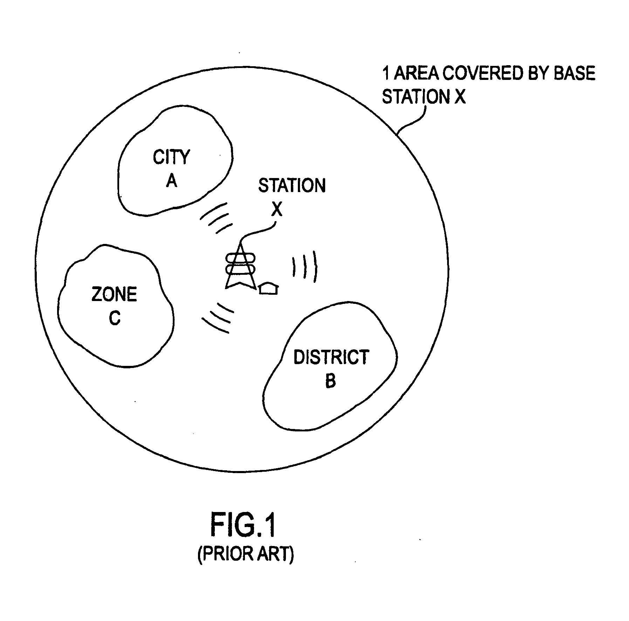

For example, as shown in Figure 1, the area designated by 1 to which a given base station can transmit is roughly shaped as a circular shape so as to cover multiple areas. In this example, as shown in Figure 1, the three areas of city A, district B, and zone C are included as the reception area covered by base station X. In a case where the reception area 1 has such a shape, because of uniform radiation, the radio waves from base station X are transmitted to all of city A, district B, and zone C even when the broadcast is information that is valid only for district B. That is, information for district B, even if it is of no relevance for city A and zone C, is unrestricted and is received in city A and zone C.

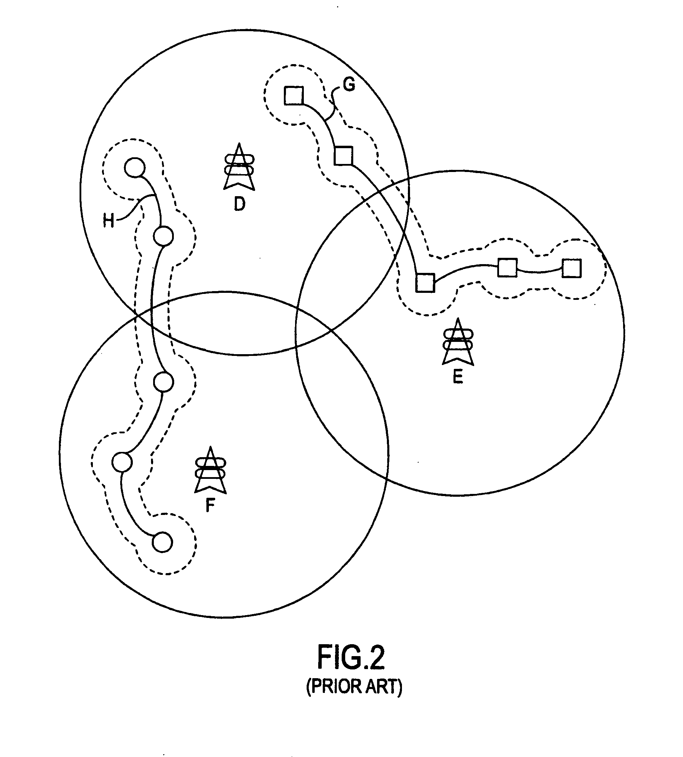

Specifically, an explanation is given using Figure 2. In this example, as shown in Figure 2, the distribution area is covered by the three base stations D, E, and F, and within this distribution area we have bus lines G and H. Bus line G is within the distribution areas of base stations D and E, and bus line H is within the distribution area of base stations D and F.

In such an area, if one wishes to distribute operation information for bus lines G and H, it can be done by the following distribution methods. For example, the above operation information is the timetable and operation status.

In the first distribution method, information for both bus lines G and H is distributed from all base stations D, E, and F.

In the second distribution method, operation information for bus lines G and H only is distributed from base station D, operation information for bus line G only is distributed from base station E, and operation information for bus line H only is distributed from base station F.

But in the first distribution method, to the distribution area covered by base station E is distributed operation information for bus line H that is irrelevant to this area, and to the distribution area covered by base station F is distributed operation information for bus line G that is irrelevant to this area.

In the second distribution method, it is necessary to flexibly select, classify and manage the transmitting base stations according to the content of the information.

In both, the first and second distribution methods, irrelevant information reaches areas outside the areas near bus lines G and H (the areas inside the dotted lines in Figure 2).

As stated above, the reception area is covered by a set of roughly circular shapes centered about base stations, and the coverage rate and boundary lines of the coverage area vary depending on such factors as the number of base stations, their transmission power, and topographical conditions, and in general the boundary is not clear. This leads to many problems locally, including that the needed information is not distributed, or that unneeded information is distributed.

And because the transmission infrastructure is determined in great measure by business conditions and legal regulations, there is the further problem that it is difficult to be flexible about the number of base stations and their transmission power in order to provide local distribution.

Moreover, the information that is required varies with the area, and if one wishes to distribute the prescribed information only to a specified area, there is the operational problem of having to select and classify the base stations that are to transmit any given information.

On the other hand, although one who receives irrelevant information can simply ignore it, a large volume of irrelevant information is inconvenient. As an extreme example, it would not be very useful to distribute local information for specified neighborhoods in Aomori (a prefecture in northeastern Japan) or Tokushima (a prefecture in southwestern Japan) when a channel broadcast nationwide is heard in Tokyo. In general, if one covers an area with a single base station, one gets many areas where irrelevant information is distributed in an infrastructure of wide coverage, and in an infrastructure of small coverage, one must control the base stations over which local information is transmitted.

WO 98/06080 discloses a system for communicating a message to a moving vehicle and includes a GPS that is used to determine the position of the vehicle. A transmitter transmits a message that includes a section giving the intended location of those receiving the message. A receiver compares the intended location in a message with the vehicle's actual location and if they match, the message is provided to the operator of the vehicle.

### Summary of the Invention

The present invention, is defined in the accompanying claims.

An information receiver according to the present invention uses a comparison means to compare position information acquired by a position acquisition means with area information, and uses reception processing means for reception processing of the main information in accordance with the results of the comparison by
the comparison means.

In this way, the information receiver selectively receives, from the various information that comes in multiply transmitted, only the information that is relevant to a desired position.

In an information reception method, according to the present invention in a comparison step, the position information acquired in a position acquisition step is compared with area information, and in a reception processing step, reception processing of the main information is performed in accordance with the results of the comparison in the comparison step.

In this way, the information reception method selectively receives, from the various information that comes in multiply transmitted, only the information that is relevant to a desired position.

In an information transmission and reception system according to the present invention, a transmission means adds area information expressing an absolute position to the main information and transmits it. In a reception means, position information acquired by a position acquisition means and the area information that is received are compared by the comparison means, and reception processing of the main information by the reception processing means is done in accordance with the results of the comparison by the comparison means.

In this way, in the information transmission and reception system, multiple information is transmitted by transmission means, and the information receiving means selectively receives, from the various information that comes in multiply transmitted, only the information that is relevant to the position that is the subject of the position information.

### Brief Description of the Drawings

Figure 1 is a diagram showing the area covered by a single base station;
Figure 2 is used for explaining a case in which information is provided within areas covered by multiple base stations;
Figure 3 is a block diagram showing the composition of an information communication system according to an embodiment of the present;
Figure 4 is a diagram showing the packetized information that is broadcast from a base station comprising the above information communication system; and
Figure 5 is a diagram showing the series of steps in reception processing in the receiver that comprises the above information communication system.

### Detailed Description of the Preferred Embodiments

In the following, a detailed description of an embodiment of this invention will be given, using the accompanying drawings. In this embodiment, the information transmission and reception system of the present invention is applied to an information communication system that performs wireless communication or radio paging.

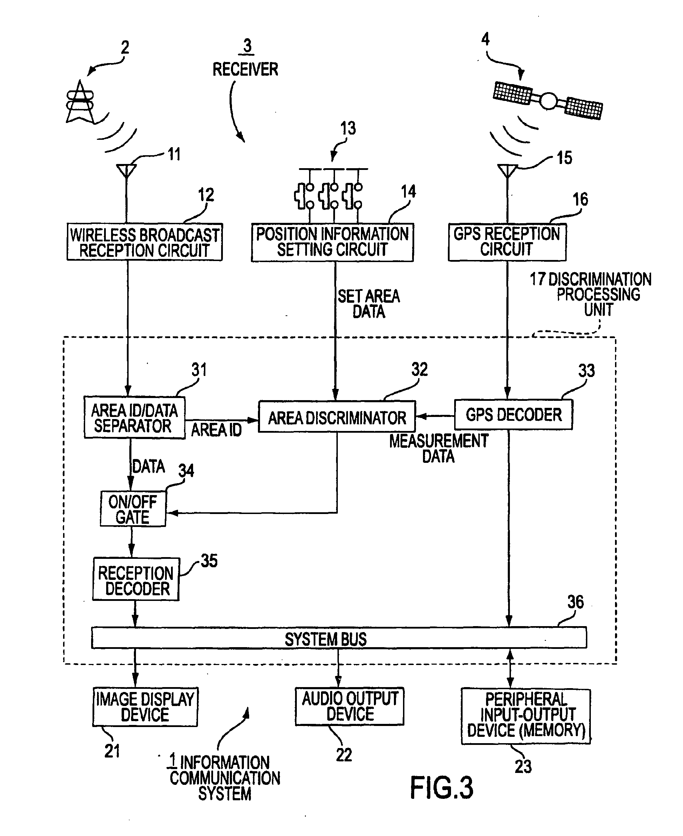

As shown in Figure 3, an information communication system 1 of this embodiment includes a base station 2 that transmits information and a receiver 3 that receives broadcasts from the base station 2. Also, information reception system 1 adopts a configuration in which receiver 3 receives satellite transmissions from a GPS (Global Positioning System) satellite 4 and measures its position.

Receiver 3 includes a broadcast reception antenna 11, a wireless broadcast reception circuit 12, an operation unit 13, a position information setting circuit 14, a GPS reception antenna 15, a GPS reception circuit 16, and a discrimination processing unit 17. In receiver 3, the discrimination processing unit 17 consists of an area ID/data separator 31, an area discriminator 32, a GPS decoder 33, an on/off gate 34, a reception decoder 35, and a system bus 36. Receiver 3 may be, for example, a small, portable pager.

Attached to receiver 3 having such configuration are an image display device 21, an audio output device 22, and a peripheral input-output device 23.

In the information communication system 1, representing the base station 2 is made up of a transmission unit that adds area information representing the absolute position to the main information and transmits it. Also, receiver 3 has a reception unit, an operation unit 13, a position information setting circuit 14, a GPS reception antenna 15, a GPS reception circuit 16 and a GPS decoder 33 which consist of a current position acquisition unit that acquires current position information that is information about one's current position; an area discriminator 32, which is a comparison unit that compares the current position information with the area information; and a reception decoder 35, which is a reception processing unit which does reception processing of the main data in accordance with the results of the comparison by the area discriminator 32.

A detailed description of the various parts that make up information reception system 1 is as follows:
The wireless broadcast reception circuit 12 receives wireless broadcasts from base station 2 via broadcast reception antenna 11.

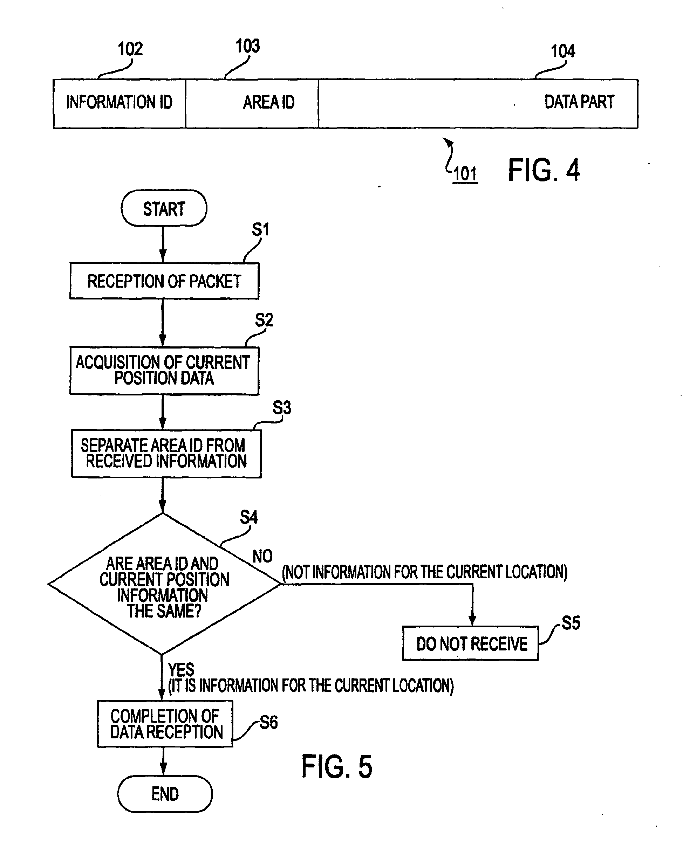

Here the information broadcast from base station 2 is, for example, content information; to this content information is added the area ID of the area to which it is to be sent, according to the content. As shown in Figure 4, broadcast information 101 is packetized into information ID 102, area ID 103, and data part 104.

Stored in the data part 104 is the main information to be distributed; for example, the main information may be weather information.

Information ID 102 indicates the nature of the main information stored in the data part 104; for example, if weather information is stored in data part 104, information indicating that the main information is weather information is stored in information ID 102.

The area ID 103 indicates information about the area to which the main information stored in data part 104 is to be distributed ; for example, if weather information is stored in data part 104, the area whose weather information is to be shown is stored in this area ID 103. That is, if for example it is weather information about Shibuya (a neighborhood in Tokyo), an ID indicating Shibuya is in this area ID 103.

Information 101 having such a composition is received in the wireless broadcast reception circuit 12 and is inputted to the area ID/data separator 31 of discrimination processing unit 17.

The area ID/data separator 31 extracts the area ID 103 that has been added to main information and outputs it to area discriminator 32.

What is inputted to area discriminator 32 is the set area data set arbitrarily from the terminal itself, optionally together with the position measurement data output from the GPS decoder 33.

The set area data set arbitrarily from the terminal means the data set in the position information setting circuit 14 by the operation of the operation unit 13; that is, it is, for example, the data set by the user as a location. Here, operation unit 13 and position information setting circuit 14 constitute a position input means that inputs the current position information. Also, the set area here is not limited to the current position but can be an arbitrary area, for example, the location to which the user intends to go.

The position measurement data output from GPS decoder 33 is data that consists of the current position, etc. obtained by receiving a transmission signal from GPS satellite 4 by the GPS reception circuit 16 via GPS reception antenna 15. That is, here GPS reception antenna 15, GPS reception circuit 16, and GPS decoder 33 comprise a current position measurement means that measures the current position.

In an arbitrary system other than GPS that can measure the current position, for example, PHS (personal handyphone system) may be also used.

Area discriminator 32 decides whether the set area data from position information setting circuit 14 optionally together with the position data from GPS decoder 33 (referred as current position data, hereinafter) agree with the area ID from area ID/data separator 31. Then the on/off gate 34 is operated in accordance with the result of this decision.

That is, if the area ID and the position data agree, theon/off gate 34 is operated and the content data that is main information is passed to reception decoder 35, and if the area ID and the current position data do not agree, on/off gate 34 is closed, and main information is stopped there.

The reception decoder 35 decodes the received main information which was discriminated and input as described above. The main information decoded in the reception decoder 35 is output-processed to the outside by system bus 36. That is, depending on the application, etc. , the main information is output as an image by image display device 21 and is output as audio by audio output device 22, while storage processing to memory, alarm processing, etc. is done by peripheral input-output device 23.

The foregoing is an explanation of the parts of the information reception system 1.

Figure 5 shows the series of steps realized by receiver 3 for reception processing of the main information.

As shown in Figure 5, in step S 1, receiver 3 receives the packetized information broadcast from base station 2.

In step S2, receiver 3 acquires the position data which may be current position data. This position data is the set area data set by position information setting circuit 14, optionally together with the measurement data obtained from GPS decoder 33. Either of steps S 1 and S2 may be executed first.

In step S3, receiver 3 separates the area ID from the packetized information it received.

Then, in step S4, receiver 3 compares the area ID of the received information and the position data and decides whether they match. If the area ID of the received information and the position data match, then the main information stored in the received packet is the needed information, and if conversely they do not match, then the main information stored in the received packet is unneeded information.

If they do not match, control proceeds to step S5, and processing is done so that the information is not received. Specifically, the on/off gate 34 is turned off by a signal from area discriminator 32.

If, on the other hand, it is confirmed that main information is a needed information, receiver 3 proceeds to step S6 and completes the data reception, which is reception processing of main information. Specifically, on/off gate 34 is turned on by a signal from area discriminator 32, and the received information is reception-processed by reception decoder 35. Then the received signal is sent via system bus 36 to image display device 21, audio output device 22, and peripheral input-output device 23, etc.

That is, for example, an ID indicating an area such as"Shibuya"or"Ginza" (neighborhoods of Tokyo) is in area ID 103 shown in above Figure 4, the area ID is compared with the position information input using the setting circuit 14 and optionally also information calculated by GPS, and information for other than one's own location is discarded.

In the information communication system 1, receiver 3 receives the appropriate main information by discriminating the area information that is added to the main information that is broadcast from base station 2. By constructing information communication system 1 in this way, even if local information closely relevant to each area is broadcast from an unspecified base station, it is arbitrarily taken or discarded in the receiving terminal, and only highly useful information is automatically received and undergoes processing, such as display and storage.

Thus a terminal in any location can receive only local information that is useful for its area, regardless of the conditions of the transmission infrastructure or the state of coverage, which makes it much more convenient to receive information.

This information communication system 1, while maintaining the general-use advantages of broadcasting on the transmission side of base station 2, has on the reception side of receiver 3 the advantages of narrowcasting, pinpointing exactly the information which is relevant to an area.

The embodiment shows receiver 3 with dedicated circuits from each block, but needless to say the parts other than the analog circuits including the radio wave tuning circuitry can be realized by digital signal processing (DSP) firmware processing or by central processing unit (CPU) software processing.

The embodiment was described by adding one area as area information to the main information to be distributed, but it is not limited to this. For example, many areas may be represented in the area information for each item of main information. Specifically, by setting multiple areas such as "Shibuya" and "Ginza" as area information, it is possible to communication information that is useful for these areas, such as weather information for the region including Shibuya and Ginza.

The information receiver of the present invention is not limited to its application to pagers. That is, the information receiver may be applied, for example, to a portable information communication terminal, a so-called personal digital assistant (PDA) which maintains portability and provides information communication, organization, and storage.

The information receiver of this invention -- by having a position acquisition means that acquires current position information, which is information about a position e.g. one's current position ; a comparison means that compares the position information and the area information ; and a reception processing means that does reception processing on the main information in accordance with the results of the comparison by the comparison means -- compares by means of the comparison means the position information acquired by the position acquisition means and the area information, and by the reception processing means can do reception processing on the main information in accordance with the results of the comparison by the comparison means.

This makes it possible for the information receiver to selectively receive only information relevant to an input position, e.g. its current position, from the various information that comes in multiply transmitted.

The information reception method of this invention -- by having a position acquisition step that acquires position information from a user-operated setting means;, a comparison step that compares the position information and the area information; and a reception processing step that does reception processing on the main information in accordance with the results of the comparison in the comparison step -- compares in the comparison step the position information acquired in the position acquisition step with the area information, and in the reception processing step does reception processing on the main information in accordance with the results of the comparison in the comparison step.

In this way, the information reception method selectively receives, from the various information that comes in multiply transmitted, only the information that is relevant to the user-set position.

The information transmission and reception system of the present invention -- by having a transmission means that adds to the main information, area information that expresses one's absolute position and transmits it, and a reception means that has a position acquisition means that acquires position information, which is information about a user-set position; a comparison means that compares the position information with the received area information ; and a reception processing means which provides reception processing of the main information in accordance with the results of the comparison by the comparison means -- can by the transmission means add area information expressing an absolute position to the main information and transmit it, and can with the reception means compare the position information acquired by the position acquisition means and the received area information by means of the comparison means, and can by the reception processing means do the reception processing of the main information in accordance with the results of the comparison by the comparison means.

In this way, in the information transmission and reception system, multiple information is transmitted by transmission means, and the information receiving means selectively receives, from the various information that comes in multiply transmitted, only the information that is relevant to the user-set position.

## Claims

1. An information receiver in the form of a portable information communication terminal that receives main information to which area information that represents an area absolute position has been added, comprising;
a position acquisition means (13-16, 33) that is configured to acquire position information
a comparison means (32) for comparing said position information from the position acquisition means with said area information, and
a reception processing means (35) for reception processing of said main information in accordance with the results of comparison by said comparison means
**characterised in that** the position acquisition means comprises a position information setting means (14) that is configured to allow a user to set the position information into the receiver.

2. The information receiver as described in claim 1, which further includes a current position acquisition means (13-16, 33) that is configured to acquire current position information, which is information about the current position of the receiver and wherein the comparison means (32) is configured to compare said current position information with said area information.

3. The information receiver as described in claim 2, wherein said current position acquisition means (13-16, 33) includes a current position measurement means (15, 16, 33) that measures the current position.

4. An information reception method of receiving using a portable information communication terminal main information to which area information that represents an area absolute position has been added, the method comprising:
a position acquisition step (52) of acquiring position information
a comparison step (54) that compares said position information with said area information; and
a reception processing step (56) of reception processing said main information in accordance with the results of the comparison in said comparison step
**characterised in that** the position acquisition step (52) comprises acquiring the position information set by a user into the communication terminal.

5. An information transmission and reception system, comprising:
a transmission means (2) that is configured to add to the main information area (104) information that represents an area absolute position (103) and to transmit said main information with said added area information; and
a reception means in the form of a portable information communication terminal for receiving the main information and the area absolute position transmitted by the transmission means and including position acquisition means (13-16, 33) that is configured to acquire position information, a comparison means (32) that is configured to compare said position information with the absolute area information, and a reception processing means (35) for reception processing of said main information in accordance with the results of comparison by said comparison means
characerised in that the position acquisition means comprises position information setting means (14) that is configured to allow a user to set position information into the receiver.

6. The information transmission and reception system of claim 5, wherein the reception means further includes a current position acquisition means (13-16, 33) that is configured to acquire current position information, which is information about the current position of the receiver and wherein the comparison means (32) is configured to compare said current position information with said area information.

7. The information transmission and reception system as described in claim 6, wherein said current position acquisition means has a current position measurement means (15, 16, 33) that measures the current position.

## Patentansprüche

1. Informationsempfänger in Form eines tragbaren Informationskommunikationsendgeräts, das Hauptinformationen empfängt, zu denen Bereichsinformationen hinzugefügt worden sind, die eine absolute Position eines Bereichs repräsentieren, mit:
Positionserfassungsmitteln (13-16, 33), die konfiguriert sind, um Positionsinformationen zu erfassen;
Vergleichsmitteln (32), um die Positionsinformationen von den Positionserfassungsmitteln mit den Bereichsinformationen zu vergleichen, und
Empfangsverarbeitungsmitteln (35), um eine Empfangsverarbeitung der Hauptinformationen in Übereinstimmung mit den Ergebnissen des Vergleichs durch die Vergleichsmittel auszuführen,
**dadurch gekennzeichnet, dass** die Positionserfassungsmittel Positionsinformations-Einstellmittel (14) enthalten, die konfiguriert sind, um einem Anwender zu ermöglichen, die Positionsinformationen in dem Empfänger einzustellen.

2. Informationsempfänger nach Anspruch 1, der ferner Mittel (13-16, 33) zum Erfassen einer aktuellen Position enthält, die konfiguriert sind, um Informationen über eine aktuelle Position zu erfassen, die Informationen über die aktuelle Position des Empfängers sind, wobei die Vergleichsmittel (32) konfiguriert sind, um die Informationen über die aktuelle Position mit den Bereichsinformationen zu vergleichen.

3. Informationsempfänger nach Anspruch 2, wobei die Mittel (13-16, 33) für die Erfassung der aktuellen Position Mittel (15, 16, 33) zum Messen der aktuellen Position enthalten, die die aktuelle Position messen.

4. Informationsempfangsverfahren, um unter Verwendung eines tragbaren Informationskommunikationsendgeräts Hauptinformationen zu empfangen, zu denen Bereichsinformationen, die die absolute Position eines Bereichs repräsentieren, hinzugefügt worden sind, wobei das Verfahren enthält:
einen Positionserfassungsschritt (52) zum Erfassen von Positionsinformationen,
einen Vergleichsschritt (54), um die Positionsinformationen mit den Bereichsinformationen zu vergleichen; und
einen Empfangsverarbeitungsschritt (56), um eine Empfangsverarbeitung der Hauptinformationen in Übereinstimmung mit den Ergebnissen des Vergleichs in dem Vergleichsschritt auszuführen,
**dadurch gekennzeichnet, dass** der Positionserfassungsschritt (52) das Erfassen der Positionsinformationen, die durch einen Anwender im Kommunikationsendgerät eingestellt worden sind, enthält.

5. Informationssende- und Informationsempfangssystem, mit:
Sendemitteln (2), die konfiguriert sind, um zu den Hauptinformationen (104) Bereichsinformationen hinzuzufügen, die eine absolute Position (103) des Bereichs repräsentieren, und um die Hauptinformationen mit den hinzugefügten Bereichsinformationen zu senden; und
Empfangsmitteln in Form eines tragbaren Informationskommunikationsendgeräts, um die Hauptinformationen und die absolute Position des Bereichs, die durch die Sendemittel gesendet werden, zu empfangen, die Positionserfassungsmittel (13-16, 33), die konfiguriert sind, um Positionsinformationen zu erfassen, Vergleichsmittel (32), die konfiguriert sind, um die Positionsinformationen mit den Informationen über den absoluten Bereich zu vergleichen, und Empfangsverarbeitungsmittel (35), um eine Empfangsverarbeitung der Hauptinformationen in Übereinstimmung mit den Ergebnissen des Vergleichs durch die Vergleichsmittel auszuführen, enthalten,
**dadurch gekennzeichnet, dass** die Positionserfassungsmittel Positionsinformations-Einstellmittel (14) enthalten, die konfiguriert sind, um einem Anwender zu ermöglichen, Positionsinformationen in dem Empfänger einzustellen.

6. Informationssende- und Informationsempfangssystem nach Anspruch 5, wobei die Empfangsmittel ferner Mittel (13-16, 33) zum Erfassen einer aktuellen Position enthalten, die konfiguriert sind, um Informationen über eine aktuelle Position, die Informationen über die aktuelle Position des Empfängers sind, zu erfassen, und wobei die Vergleichsmittel (32) konfiguriert sind, um die Informationen über die aktuelle Position mit den Bereichsinformationen zu vergleichen.

7. Informationssende- und Informationsempfangssystem nach Anspruch 6, wobei die Mittel zum Erfassen der aktuellen Position Mittel (15, 16, 33) zum Messen der aktuellen Position, die die aktuelle Position messen, besitzen.

## Revendications

1. Récepteur d'information sous la forme d'un terminal de communication d'informations portable qui reçoit une information principale à laquelle une information de zone qui représente une position absolue de zone a été ajoutée, comportant :
un moyen d'acquisition de position (13-16, 33) qui est configuré pour acquérir une information de position
un moyen de comparaison (32) pour comparer ladite information de position provenant du moyen d'acquisition de position à ladite information de zone, et
un moyen de traitement de réception (35) pour un traitement de réception de ladite information principale conformément aux résultats de la comparaison effectuée par ledit moyen de comparaison
**caractérisé en ce que** le moyen d'acquisition de position comporte un moyen de définition d'information de position (14) qui est configuré pour permettre à un utilisateur de définir l'information de position dans le récepteur.

2. Récepteur d'information selon la revendication 1, qui comporte en outre un moyen d'acquisition de position effective (13-16, 33) qui est configuré pour acquérir une information de position effective, qui est une information concernant la position effective du récepteur et où le moyen de comparaison (32) est configuré pour comparer ladite information de position effective à ladite information de zone.

3. Récepteur d'information selon la revendication 2, dans lequel ledit moyen d'acquisition de position effective (13-16, 33) comprend un moyen de mesure de position effective (15, 16, 33) qui mesure la position effective.

4. Procédé de réception d'information pour recevoir grâce un terminal de communication d'informations portable une information principale à laquelle une information de zone qui représente une position absolue de zone a été ajoutée, le procédé comportant :
une étape d'acquisition de position (52) pour acquérir une information de position,
une étape de comparaison (54) qui compare ladite information de position à ladite information de zone ; et
une étape de traitement de réception (56) pour traiter la réception de ladite information principale conformément aux résultats de la comparaison effectuée lors de ladite étape de comparaison
**caractérisé en ce que** l'étape d'acquisition de position (52) comporte l'acquisition de l'information de position fixée par un utilisateur dans le terminal de communication.

5. Système de transmission et de réception d'information, comportant :
un moyen de transmission (2) qui est configuré pour ajouter à la zone d'information principale (104) une information qui représente une position absolue de zone (103) et pour transmettre ladite information principale avec ladite information de zone ajoutée ; et
un moyen de réception sous la forme d'un terminal de communication d'informations portable pour recevoir l'information principale et la position absolue de zone transmises par le moyen de transmission et comprenant un moyen d'acquisition de position (13-16, 33) qui est configuré pour acquérir une information de position, un moyen de comparaison (32) qui est configuré pour comparer ladite information de position à l'information de zone absolue, et un moyen de traitement de réception (35) pour un traitement de réception de ladite information principale conformément aux résultats de la comparaison effectuée par ledit moyen de comparaison
**caractérisé en ce que** le moyen d'acquisition de position comporte un moyen de définition d'information de position (14) qui est configuré pour permettre un utilisateur de définir une information de position dans le récepteur.

6. Système de transmission et de réception d'information selon la revendication 5, dans lequel le moyen de réception comporte en outre un moyen d'acquisition de position effective (13-16, 33) qui est configuré pour acquérir une information de position effective, qui est une information concernant la position effective du récepteur et où le moyen de comparaison (32) est configuré pour comparer ladite information de position effective à ladite information de zone.

7. Système de transmission et de réception d'information selon la revendication 6, dans lequel ledit moyen d'acquisition de position effective possède un moyen de mesure de position effective (15, 16, 33) qui mesure la position effective.
